# EUROPEAN PATENT APPLICATION

(11) **EP 4 273 950 A1**
(43) Date of publication of application: **08.11.2023**
(21) Application number: 20967786.3
(22) Date of filing: 31.12.2020
(51) Int. Cl.: H01M 4/13, H01M 4/62

(54) **ELECTRODE PLATE, ELECTROCHEMICAL DEVICE AND ELECTRONIC DEVICE**

(71) Applicant: Ningde Amperex Technology Limited, Ningde, Fujian 352100 (CN); Dongguan Amperex Technology Limited, Dongguan City, Guangdong Province 523000 (CN)
(72) Inventor: LI, Baozhang, Ningde, Fujian 352100 (CN)
(74) Representative: Icosa
(86) International application number: PCT/CN2020/142269
(87) International publication number: WO 2022/141447

(57) **Abstract**

This application provides an electrode plate, an electrochemical device, and an electronic device. The electrode plate includes a current collector and an active material layer located on the current collector. The active material layer includes particle groups. A particle group includes active material particles and a first binder particle. The first binder particle bonds at least three active material particles. A single particle group includes a first binder particle and at least three active material particles bonded by the first binder particle. A particle diameter of the first binder particle in the plurality of particle groups is 0.1 µm to 3.5 µm. The composition of the first binder particle in this application includes polyolefin, thereby improving the bonding between the active material particles and the current collector. In addition, the hardness of the polyolefin is relatively low, and the use of the polyolefin in the active material layer avoids or alleviates adverse effects on a compacted density of the active material layer.

## Description

### TECHNICAL FIELD

This application relates to the field of electrochemical energy storage, and in particular, to an electrode plate, an electrochemical device, and an electronic device.

### BACKGROUND

With the development and progress of electrochemical devices (such as a lithium-ion battery), higher requirements have been posed on the energy density and safety performance of the electrochemical devices. Although the current technology for improving the electrochemical devices can improve the energy density and safety performance of the electrochemical devices to some extent, the improvement is still unsatisfactory and more improvements are required.

### SUMMARY

Embodiments of this application provide an electrode plate. The electrode plate includes a current collector and an active material layer located on the current collector. The active material layer includes a plurality of particle groups. A single particle group includes a first binder particle and at least three active material particles bonded by the first binder particle. A particle diameter of the first binder particle in the plurality of particle groups is 0.1 µm to 3.5 µm.

In some embodiments, the particle diameter of the first binder particle in the plurality of particle groups is 0.3 µm to 1.5 µm.

In some embodiments, composition of the first binder particle includes polyolefin.

In some embodiments, the polyolefin includes at least one of polypropylene or polyethylene.

In some embodiments, a particle diameter of the active material particles in the plurality of particle groups is 1 µm to 40 µm.

In some embodiments, the at least three active material particles include a first active material particle, a second active material particle, and a third active material particle. The particle diameter of the first active material particles in the plurality of particle groups is larger than the particle diameter of the second active material particles in the plurality of particle groups by 4 µm to 17 µm. A ratio of the particle diameter of the first active material particles in the plurality of particle groups to the particle diameter of the second active material particles in the plurality of particle groups is 2:1 to 7:1. The particle diameter of the second active material particles in the plurality of particle groups is larger than the particle diameter of the third active material particles in the plurality of particle groups by 0.01 µm to 8 µm. A ratio of the particle diameter of the second active material particles in the plurality of particle groups to the particle diameter of the third active material particles in the plurality of particle groups is greater than 1 and less than or equal to 4.

In some embodiments, the active material layer further includes a second binder. Composition of the second binder includes at least one of polyacrylic acid sodium salt, polyacrylic acid, polyacrylate, polymethyl methacrylate, polyacrylonitrile, polyamide, or sodium carboxymethyl cellulose.

In some embodiments, based on a total mass of the active material layer, a percentage of a total mass of the first binder particle and the second binder is 0.5% to 8%, and a mass ratio of the first binder particle to the second binder is 1:10 to 10:1.

In some embodiments, the electrode plate is a positive electrode plate, and the active material layer includes at least one of lithium cobalt oxide, lithium iron phosphate, lithium iron manganese phosphate, sodium iron phosphate, lithium vanadium phosphate, sodium vanadium phosphate, lithium vanadyl phosphate, sodium vanadyl phosphate, lithium vanadium oxide, lithium manganese oxide, lithium nickel oxide, lithium nickel cobalt manganese oxide, lithium-rich manganese-based material, or lithium nickel cobalt aluminum oxide.

Another embodiment of the present invention provides an electrochemical device, including a positive electrode plate, a negative electrode plate, and a separator disposed between the positive electrode plate and the negative electrode plate. At least one of the positive electrode plate or the negative electrode plate is the electrode plate according to an embodiment of the present invention.

Another embodiment of the present invention provides an electronic device, including the electrochemical device according to an embodiment of the present invention.

The composition of the first binder particle in this application includes polyolefin, thereby improving the bonding between the active material particles and the current collector. In addition, the hardness of the polyolefin is relatively low, and the use of the polyolefin in the active material layer avoids or alleviates adverse effects on a compacted density of the active material layer. According to another aspect, this application provides a preferred size relationship between a binder particle and an active material particle bonded by the binder particle in an active material layer. The spatial arrangement of the binder particle and the active material particle arranged in such a size relationship is more compact, thereby improving the volume utilization of the active material layer. Further, such a size relationship can increase an energy density of the electrochemical device that includes the active material layer.

### BRIEF DESCRIPTION OF DRAWINGS

FIG. 1A is a schematic diagram of an electrochemical device 100 according to some embodiments of this application;
FIG. 1B is a schematic diagram of an electrode assembly 1 of an electrochemical device 100 according to some embodiments of this application;
FIG. 2 is a schematic diagram of an electrode plate according to some embodiments of this application;
FIG. 3 is schematic sectional view of the electrode plate sectioned along a thickness direction of the electrode plate shown in FIG. 2;
FIG. 4 and FIG. 5 show a scanning electron microscopy image of an active material layer of a positive electrode plate 10 according to Embodiment 1 and Embodiment 4 respectively; and
FIG. 6 shows a scanning electron microscopy image of an active material layer of a positive electrode plate 10 according to some embodiments of this application.

### DETAILED DESCRIPTION OF EMBODIMENTS

The following embodiments enable a person skilled in the art to understand this application more comprehensively, but without limiting this application in any way.

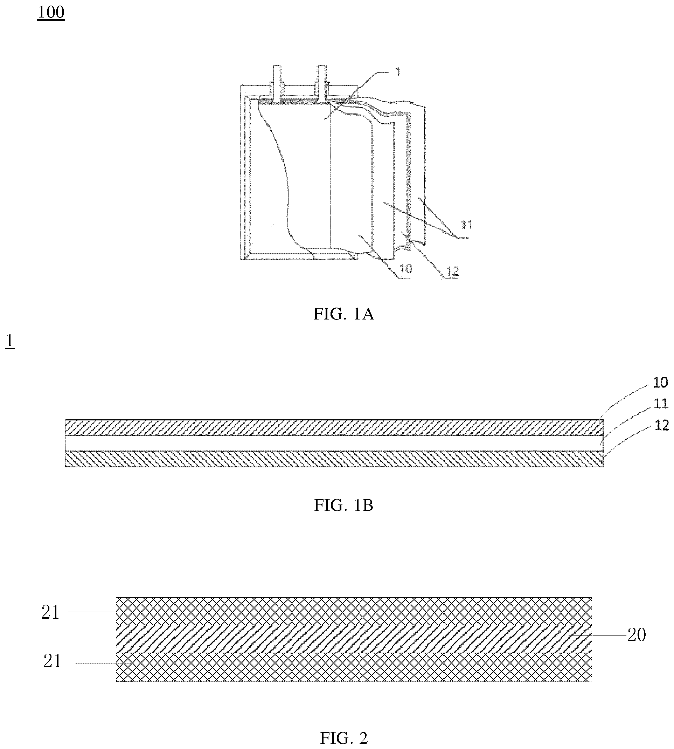

FIG. 1A is a schematic diagram of an electrochemical device 100 according to some embodiments of this application. The electrochemical device 100 includes an electrode assembly 1. The electrode assembly 1 may include a positive electrode plate 10, a negative electrode plate 12, and a separator 11 disposed between the positive electrode plate 10 and the negative electrode plate 12.

In some embodiments, the electrochemical device 100 may be formed by winding or stacking the electrode assembly 1. For example, in some embodiments of this application, the electrochemical device 100 may be manufactured by winding or stacking the positive electrode plate 10, the separator 11, and the negative electrode plate 12 sequentially into the electrode assembly 1, loading the electrode assembly into, for example, an aluminum plastic film for sealing, and then injecting an electrolytic solution and performing chemical formation and sealing. The positive electrode plate 10, the separator 11, and the negative electrode plate 12 are immersed in the electrolytic solution. For the description of the electrode assembly 1, the positive electrode plate 10, and the negative electrode plate 12, reference may be made to FIG. 1B of this application and descriptions related thereto.

In some embodiments, the electrochemical device 100 may be, but is not limited to, a lithium-ion battery. In some embodiments, the electrochemical device 100 may further include an electrolyte. The electrolyte may be one or more of a gel electrolyte, a solid-state electrolyte, and an electrolytic solution. The electrolytic solution includes a lithium salt and a nonaqueous solvent. The lithium salt is one or more selected from LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoroborate. For example, the lithium salt is LiPF₆ because it is of a high ionic conductivity and can improve cycle characteristics.

The nonaqueous solvent may be a carbonate compound, a carboxylate compound, an ether compound, another organic solvent, or any combination thereof.

The carbonate compound may be a chain carbonate compound, a cyclic carbonate compound, a fluorocarbonate compound, or any combination thereof.

Examples of the chain carbonate compound are diethyl carbonate (DEC), dimethyl carbonate (DMC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1, 2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Examples of the carboxylate compound are methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, methyl formate, or any combination thereof.

Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

A person skilled in the art understands that the electrochemical device 100 (such as a lithium-ion battery) and the method for preparing the electrochemical device 100, which are described above, are merely examples, but are not intended to limit the scope of this application. To the extent not departing from the content disclosed herein, other electrochemical devices 100 may be adopted instead, and other methods commonly used in the art may be used to prepare the electrochemical devices 100. For example, although the electrochemical device in FIG. 1A is a pouch-type device, the electrochemical device according to the embodiments of this application may be in other shapes such as a rectangle, cylinder, or coin.

FIG. 1B is a schematic diagram of an electrode assembly 1 of an electrochemical device 100 according to some embodiments of this application. As shown in FIG. 1B, the electrode assembly 1 includes a positive electrode plate 10, a negative electrode plate 12, and a separator 11 disposed between the positive electrode plate 10 and the negative electrode plate 12. The positive electrode plate 10 includes a positive current collector and a positive active material layer coated on at least one surface of the positive current collector. The negative electrode plate 11 includes a negative current collector and a negative active material layer coated on at least one surface of the negative current collector. For the descriptions of the positive current collector, the positive active material layer, the negative current collector, and the negative active material layer, reference may be made to FIG. 2 and corresponding descriptions.

In some embodiments, the separator 11 includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. Especially, the polyethylene and the polypropylene are highly effective in preventing short circuits, and improve stability of the battery through a turn-off effect. In some embodiments, the thickness of the separator 11 is within a range of approximately 5 µm to 500 µm.

In some embodiments, a porous layer may be further included in a surface of the separator 11. The porous layer is disposed on at least one surface of a substrate of the separator 11. The porous layer includes inorganic particles and a binder. The inorganic particles is at least one selected from aluminum oxide (Al₂O₃), silicon oxide (SiO₂), magnesium oxide (MgO), titanium oxide (TiO₂), hafnium dioxide (HfO₂), tin oxide (SnO₂), ceria (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide, or barium sulfate. In some embodiments, a diameter of a pore of the separator 11 is within a range of approximately 0.01 µm to 1 µm. The binder in the porous layer is at least one selected from polyvinylidene difluoride, a vinylidene difluoride-hexafluoropropylene copolymer, a polyamide, polyacrylonitrile, polyacrylic ester, polyacrylic acid, sodium polyacrylate, sodium carboxymethyl cellulose, polyvinylpyrrolidone, polyvinyl ether, poly methyl methacrylate, polytetrafluoroethylene, or polyhexafluoropropylene. The porous layer on the surface of the separator 11 can improve heat resistance, oxidation resistance, and electrolyte infiltration performance of the separator 11, and enhance adhesion between the separator 11 and the electrode plate.

FIG. 2 is a schematic diagram of an electrode plate according to some embodiments of this application. The electrode plate includes a current collector 20 and an active material layer 21 disposed on the current collector 20. In some embodiments, the electrode plate may be the positive electrode plate 10 and/or negative electrode plate 12 in FIG. 1.

When the electrode plate is the positive electrode plate 10, the current collector 20 is a positive current collector. The active material layer 21 is a positive active material layer.

The positive current collector is a structure or component that collects a positive current. In some embodiments, the positive current collector is an aluminum foil. Alternatively, the positive current collector may be another positive current collector commonly used in the art. In some embodiments, the thickness of the positive current collector may be 1 µm to 200 µm.

A part of the positive current collector is coated with the positive active material layer. In some embodiments, the thickness of the active material layer may be 10 µm to 500 µm.

The positive active material layer includes a positive active material, a positive conductive agent, and a positive binder.

The positive active material may be a material that allows reversible intercalation and deintercalation of lithium. In some embodiments, the positive active material is a compound that allows reversible intercalation and deintercalation of lithium ions. For example, the positive active material may include at least one of lithium cobalt oxide, lithium iron phosphate, lithium iron manganese phosphate, sodium iron phosphate, lithium vanadium phosphate, sodium vanadium phosphate, lithium vanadyl phosphate, sodium vanadyl phosphate, lithium vanadium oxide, lithium manganese oxide, lithium nickel oxide, lithium nickel cobalt manganese oxide, lithium-rich manganese-based material, or lithium nickel cobalt aluminum oxide.

The positive conductive agent provides conductivity to the positive electrode. For example, the positive conductive agent can implement electrical contact between the positive active material and the positive current collector, thereby providing conductivity to the positive electrode. The positive conductive agent may include at least one of conductive carbon black, Ketjen black, graphite flakes, graphene, carbon nanotubes, or carbon fiber. In some embodiments, a mass ratio of the active material, the conductive agent, and the binder in the active material layer may be (70 to 98): (1 to 15): (1 to 15). Understandably, what is enumerated above is merely an example, and the active material layer of the positive electrode plate 10 may adopt any other appropriate material, thickness, and mass ratio.

The positive binder bonds the positive conductive agent and the positive active material onto the positive current collector. The positive binders may include: resin polymers such as polyethylene, polypropylene, sodium polyacrylate, polyethylene terephthalate, polymethyl methacrylate, polyimide, aramid, cellulose, and nitrocellulose; rubber polymers such as SBR (styrene butadiene rubber), NBR (nitrile butadiene rubber), fluorine rubber, isoprene rubber, butadiene rubber, and ethylene-propylene rubber; thermoplastic elastomer polymers such as a styrene-butadiene-styrene block copolymer or a hydrogenated product thereof, an EPDM (ethylene-propylene-diene terpolymer), a styrene-ethylene-butadiene-ethylene copolymer, a styrene-isoprene-styrene block copolymer or a hydrogenated product thereof; soft resinous polymers such as polyvinyl acetate, an ethylene-vinyl acetate copolymer, a propylene-α-olefin copolymer; fluorine-based polymers such as polyvinylidene difluoride, polytetrafluoroethylene, fluorinated polyvinylidene difluoride, a polytetrafluoroethylene-ethylene copolymer, and a polytetrafluoroethylene-vinylidene fluoride copolymer; or other ion-conductive polymer composites containing alkali metal ions (especially lithium ions), or the like. Preferably, the positive binder is polyolefin, for example, at least one of polyethylene or polypropylene.

When the electrode plate is the negative electrode plate 12, the current collector 20 is a negative current collector. The active material layer 21 is a negative active material layer.

The negative current collector is a structure or component that collects a negative current. In some embodiments, the current collector of the negative electrode plate 12 may be at least one of a copper foil, a nickel foil, or a carbon-based current collector.

The negative active material layer includes a negative active material, a negative conductive agent, and a negative binder.

The negative active material may include a material that allows reversible intercalation and deintercalation of lithium ions. For example, the negative active material may include at least one of artificial graphite, natural graphite, mesocarbon microbead, soft carbon, hard carbon, silicon, tin, a silicon-carbon compound, a silicon-oxygen compound, or lithium titanium oxide.

The negative conductive agent provides conductivity to the negative electrode. For example, the negative conductive agent can implement electrical contact between the negative active material and the negative current collector, thereby providing conductivity to the negative electrode. The negative conductive agent may include at least one of conductive carbon black, Ketjen black, graphite flakes, graphene, carbon nanotubes, carbon fiber, metal powder or metal fiber of copper (Cu), nickel (Ni), aluminum (Al), or silver (Ag), or a conductive polymer such as a polyphenylene derivative. In some embodiments, a mass ratio between the negative active material (such as a silicon-based material and a carbon material), the conductive agent, and the binder (including the first binder and the second binder) in the active material layer may be (70 to 98): (1 to 15): (1 to 15). Understandably, what is enumerated above is merely an example, and any other appropriate material and mass ratio may apply.

The negative binder bonds the negative conductive agent and the negative active material onto the negative current collector. The negative binder may include at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene difluoride, polyethylene, polypropylene, styrene-butadiene rubber (SBR), acrylated (acrylic-based modified) SBR, epoxy resin, or nylon.

Understandably, although the active material layer 21 shown in FIG. 2 is disposed on both sides of the current collector 20, the drawing is merely exemplary but not intended to limit this application. The active material layer 21 may be disposed on one side or both sides of the current collector 20. In some embodiments, the active material layer 21 may be disposed on just one side of the current collector 20. Although the current collector 20 and the active material layer 21 shown in FIG. 2 contact each other directly, in some embodiments, an additional layer may be disposed between the current collector 20 and the active material layer 21. In some embodiments, the current collector 20 may be disposed on just a part of the surface of the active material layer 21.

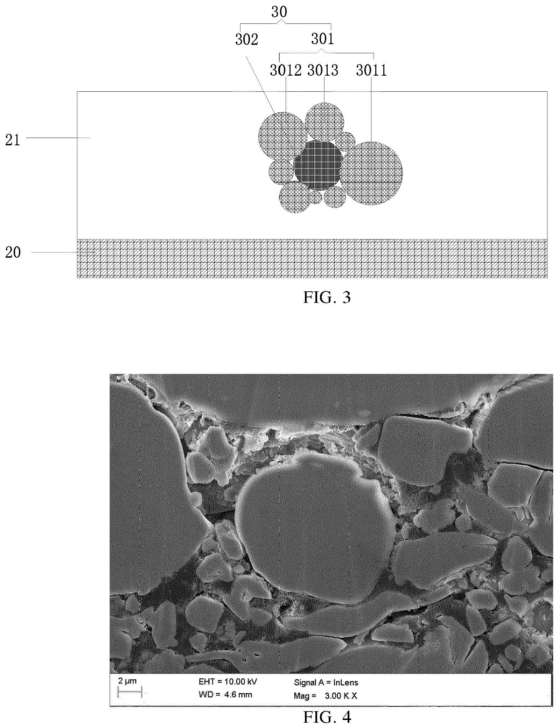

According to some embodiments of this application, FIG. 3 is schematic sectional view of the electrode plate sectioned along a thickness direction of the electrode plate shown in FIG. 2.

As shown in FIG. 3, in some embodiments, the active material layer 21 includes a particle group 30. The particle group 30 includes an active material particle 301 and a first binder particle 302. In the active material layer 21, the first binder particle 302 may serve to bond the active material particle 301. The first binder particle 302 and the active material particle 301 bonded by the first binder particle 302 constitute the particle group 30. Understandably, just one particle group 30 is shown in the drawing. In some embodiments, the active material layer 21 includes a plurality of particle groups 30.

The active material particle 301 and the first binder particle 302 may have the same particle diameter or different particle diameters.

In some embodiments, the particle diameter of a single particle (for example, the first binder particle 302, and the active material particle 301) in this application may be determined by the following method: determining a cross-sectional area of the particle; and determining a diameter of a circle with an area equal to the cross-sectional area to be the particle diameter of the particle. In some embodiments, the particle diameter of a particle in this application may be determined by the following method: determining a length of a longest diagonal of the particle, determining a length of a shortest diagonal of the particle, and determining the particle diameter of the particle to be an arithmetic average of the length of the longest diagonal and the length of the shortest diagonal. In some embodiments, the length of the longest diagonal of the particle is the particle diameter of the particle. In some embodiments, a length of a longest side of the particle is the particle diameter of the particle. In some embodiments, the cross section of the electrode plate sectioned along the thickness direction may be scanned by a scanning electron microscope to determine the cross-sectional area of the particle, the length of the longest diagonal, the length of the shortest diagonal, and/or the longest side of the particle. In some embodiments, the electrode plate may be processed and scanned with reference to the method provided in Embodiment 1 of this application.

The first binder particle 302 may bond a plurality of particles. In some embodiments, the first binder particle 302 bonds at least three active material particles. As shown in FIG. 3, in some embodiments, the at least three active material particles 301 include a first active material particle 3011, a second active material particle 3012, and a third active material particle 3013. The first active material particle 3011, the second active material particle 3012, and the third active material particle 3013 may have the same particle diameter or different particle diameters. In some embodiments, the first active material particle 3011, the second active material particle 3012, and the third active material particle 3013 have different particle diameters. By using the active material particles of diverse particle diameters, the packing efficiency between the active material particles is improved, and the packing pores are downsized, thereby improving the volume utilization of the active material layer and increasing the energy density of the electrochemical device 100.

In some embodiments, the particle diameter of the first active material particle 3011 is larger than the particle diameter of the second active material particle 3012, and the particle diameter of the second active material particle 3012 is larger than the particle diameter of the third active material particle 3013. In some embodiments, the first active material particle 3011, the second active material particle 3012, and the third active material particle 3013 are the active material particles ranked in the first three places in descending order of the particle diameter among the active material particles bonded by the corresponding first binder particle 302.

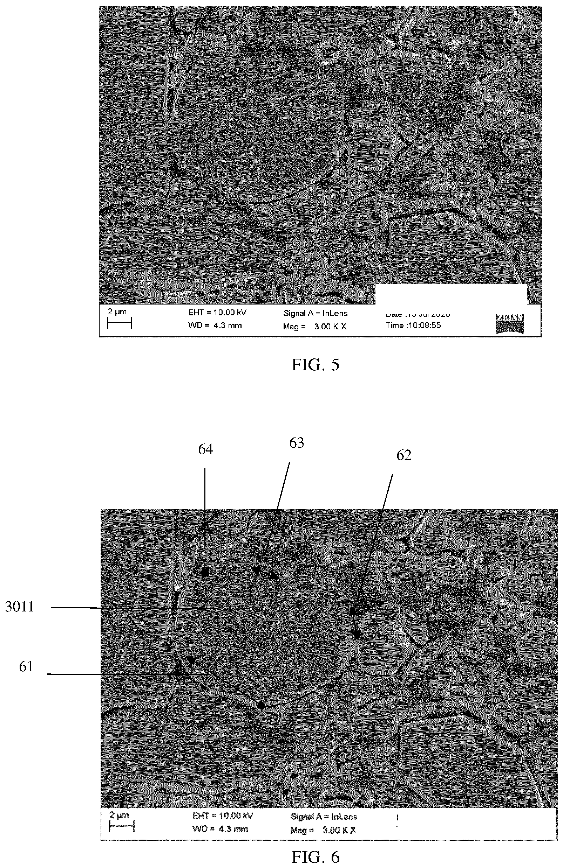

The first active material particle 3011 may be bonded by at least one binder particle 302. In some embodiments, a ratio of the length of the bonding between the edge of the cross section of the first active material particle 3011 and the first binder particle 302 to the perimeter of the cross section of the first active material particle 3011 is 0.05 to 0.2. In some embodiments, one first active material particle 3011 may be bonded by a plurality of first binder particles 302. A ratio of the length of physical contact with the plurality of first binder particles 302 in the cross section of the first active material particle 3011 to the entire perimeter of the first active material particle 3011 is the ratio of the length of the bonding between the edge of the cross section of the first active material particle 3011 and the first binder particle 302 to the perimeter of the cross section of the first active material particle 3011. In some embodiments, the ratio may be determined with a scanning electron microscope by scanning the cross section of the electrode plate sectioned along the thickness direction. In some embodiments, the electrode plate may be processed and scanned with reference to the method provided in Embodiment 1 of this application. Understandably, this is merely exemplary, and other appropriate methods may apply. As shown in FIG. 6, there are four positions of bonding between the edge of the cross section of the first active material particle 3011 and the first binder particle 302 (not shown in FIG. 6). The four positions are four lengths on the edge of the first active material particle 3011, where the four lengths correspond to the line segments 61, 62, 63, and 64, respectively, shown in the drawing. In this application, a length, which corresponds to a line segment (for example, line segment 61, 62, 63, or 64), on the edge of the first active material particle 3011, is the length that is defined by two end points of the line segment, on the edge of the first active material particle 3011. A ratio of a sum of the lengths corresponding to the line segments 61, 62, 63, and 64 respectively on the edge of the first active material particle 3011 to the perimeter of the cross section of the first active material particle 3011 is the ratio of the length of the bonding between the edge of the cross section of the first active material particle 3011 and the first binder particle 302 to the perimeter of the cross section of the first active material particle 3011. In some embodiments, the ratio may be a result obtained by evaluating the first active material particles 3011 of a plurality of particle groups 30 under a scanning electron microscope. In some embodiments, if the ratio is too low, the bonding force between the first binder particle 302 and the first active material particle 3011 may be relatively weak, thereby affecting the bonding between the active material layer 21 and the current collector 20. If the ratio is too high, it indicates that the particle diameter of the first active material particle 3011 is too small, the specific surface area is too large, and the side reactions between the active material particle 301 and the electrolytic solution increase, thereby affecting the cycle performance of the electrochemical device 100.

Although just one particle group 30 is shown in FIG. 3, the shown particle group is merely exemplary but not intended to limit this application. The active material layer 21 may further include one or more other particle groups 30 not shown. In some embodiments, the active material layer 21 includes a plurality of particle groups 30, for example, the first particle group, the second particle group, the third particle group, and so on, and the N^{th} particle group. N is a positive integer greater than or equal to 1.

The first binder particle 302 in the plurality of particle groups 30 possesses a preferred particle diameter.

In some embodiments, the particle diameter of the first binder particle 302 in the plurality of particle groups 30 is 0.1 µm to 3.5 µm. Preferably, the particle diameter of the first binder particle 302 in the plurality of particle groups 30 is 0.1 µm to 2 µm. Preferably, the particle diameter of the first binder particle 302 in the plurality of particle groups 30 is 0.3 µm to 1.5 µm. Preferably, the particle diameter of the first binder particle 302 in the plurality of particle groups 30 is 0.5 µm to 1 µm. The particle diameter of the first binder particle 302 in the plurality of particle groups 30 may be determined based on the particle diameters of a plurality of first binder particles 302 in the plurality of particle groups 30. In some embodiments, the plurality of first binder particles 302 in the plurality of particle groups 30 possess the same particle diameter. In this case, the particle diameter of the first binder particles 302 in the plurality of particle groups 30 is equal to the particle diameter of the first binder particle 302 in a single particle group. In some embodiments, the plurality of first binder particles 302 in the plurality of particle groups 30 possess different particle diameters. In this case, the particle diameter of the first binder particles 302 in the plurality of particle groups 30 is determined in the following manner: selecting n (for example, 100) particle groups randomly from the plurality of particle groups 30, where the n particle groups are the first particle group, the second particle group, and so on, and the n^{th} particle group; determining the particle diameter of the first binder particle 302 corresponding to each particle group 30 to obtain n particle diameters; and determining that a range in which at least 50% of the n particle diameters fall is the particle diameter of the first binder particle 302 in the plurality of particle groups 30. In some embodiments, there may be a plurality of ranges in which at least 50% of the n particle diameters fall. A narrowest range in the plurality of ranges is selected as the particle diameter of the first binder particle 302 in the plurality of particle groups 30.

In some embodiments, the particle diameter of the first binder particle 302 in the plurality of particle groups 30 is 0.1 µm to 3.5 µm, thereby improving performance of the electrode plate. When the particle diameter of the first binder particle 302 in the plurality of particle groups 30 is less than 0.1 µm, the number of active material particles bonded around a single first binder particle 302 is less than 3, and the bonding strength between the active material layer 21 and the current collector 20 decreases. When the particle diameter of the first binder particle 302 in the plurality of particle groups 30 is greater than 3.5 µm, the first binder particle 302 is too large to efficiently fill the pores between the active material particles 301. Consequently, pores are generated between the first binder particle and the active material particle 301, thereby reducing the effective bonding area of the first binder particle 302, reducing the bonding strength between the active material layer 21 and the current collector 20, increasing the thickness of the electrode plate, and reducing the energy density of the electrochemical device.

The active material particle 301 in the plurality of particle groups 30 possesses a preferred particle diameter.

In some embodiments, the particle diameter of the active material particles 301 in the plurality of particle groups 30 is 1 µm to 40 µm. In some embodiments, the particle diameter of the active material particles 301 in the plurality of particle groups 30 is a result obtained by evaluating a plurality of active material particles 301 under a scanning electron microscope. In some embodiments, the plurality of active material particles 301 in the plurality of particle groups 30 possess the same particle diameter. In this case, the particle diameter of the active material particles 301 in the plurality of particle groups 30 is equal to the particle diameter of the active material particle 301 in a single particle group. In some embodiments, the plurality of active material particles 301 in the plurality of particle groups 30 possess different particle diameters. In this case, the particle diameter of the active material particles 301 in the plurality of particle groups 30 is determined in the following manner: selecting n (for example, 100) particle groups randomly from the plurality of particle groups 30, where the n particle groups are the first particle group, the second particle group, and so on, and the n^{th} particle group; determining the particle diameter of the active material particle 301 corresponding to each particle group to obtain n particle diameters; and determining that a range in which at least 50% of the n particle diameters fall is the particle diameter of the active material particles 301 in the plurality of particle groups 30. In some embodiments, there may be a plurality of ranges in which at least 50% of the n particle diameters fall. A narrowest range in the plurality of ranges is selected as the particle diameter of the active material particles 301 in the plurality of particle groups 30. In some embodiments, a single particle group 30 includes a plurality of active material particles 301. The particle diameter of the active material particles 301 of a single particle group 30 is the particle diameter of a largest active material particle in the particle group, that is, the particle diameter of the first active material particle 3011.

In some embodiments, the particle diameter of the active material particles 301 in the plurality of particle groups 30 is 1 µm to 40 µm, thereby improving the performance of the electrode plate. If the particle diameter of the active material particles 301 in the plurality of particle groups 30 is too small, the specific surface area is too large, and the side reactions between the active material particles 301 and the electrolytic solution increase, thereby affecting the cycle performance the electrochemical device. On the other hand, if the particle diameter of the active material particles 301 in the plurality of particle groups 30 is too large, for example, larger than 40 µm, the packing efficiency between the active material particles 301 declines, and the pores between the active material particles 301 are enlarged, thereby reducing the volume utilization of the active material layer 21 and reducing the energy density of the electrochemical device. In addition, when the active material particles 301 in the plurality of particle groups 30 is too large, the number of active material particles 301 bonded around a single first binder particle 302 decreases, thereby being adverse to the bonding between the active material particles 301 and the current collector 20.

In some embodiments, the particle diameter of the first active material particles 3011 in the plurality of particle groups 30 is larger than the particle diameter of the second active material particles 3012 in the plurality of particle groups 30 by 4 µm to 17 µm. A ratio of the particle diameter of the first active material particles 3011 to the particle diameter of the second active material particles 3012 in the plurality of particle groups 30 is 2:1 to 7:1. The particle diameter of the second active material particles 3012 in the plurality of particle groups 30 is larger than the particle diameter of the third active material particles 3013 in the plurality of particle groups 30 by 0.01 µm to 8 µm. A ratio of the particle diameter of the second active material particles 3012 to the particle diameter of the third active material particles 3013 in the plurality of particle groups 30 is greater than 1 and less than or equal to 4.

In this application, the particle diameter of the first active material particles 3011 in the plurality of particle groups 30 is a result obtained by evaluating the first active material particles 3011 of a plurality of particle groups 30 under a scanning electron microscope. In some embodiments, the plurality of first active material particles 3011 in the plurality of particle groups 30 possess the same particle diameter. In this case, the particle diameter of the first active material particles 3011 in the plurality of particle groups 30 is equal to the particle diameter of the first active material particles 3011 in a single particle group. In some embodiments, the plurality of first active material particles 3011 in the plurality of particle groups 30 possess different particle diameters. In this case, the particle diameter of the first active material particles 3011 in the plurality of particle groups 30 may be obtained by evaluating the first active material particles 3011 in the plurality of particle groups 30 under a scanning electron microscope. The particle diameter of the first active material particles 3011 in the plurality of particle groups 30 in this application may be determined with reference to the method for determining the particle diameter of the first binder particle 302 in the plurality of particle groups 30 in this application. Similarly, the particle diameters of the second active material particles 3012 in the plurality of particle groups 30 and the third active material particles 3013 in the plurality of particle groups 30 can be determined.

In this application, the ratio of the particle diameter of the first active material particles 3011 to the particle diameter of the second active material particles 3012 in the plurality of particle groups 30 may be determined in the following manner: selecting n (for example, 100) particle groups randomly from the plurality of particle groups 30, where the n particle groups are the first particle group, the second particle group, and so on, and the n^{th} particle group; calculating, for each particle group, a ratio of the particle diameter of the first active material particles 3011 to the particle diameter of the second active material particles 3012 in the particle group to obtain n ratios; and determining that a range in which at least 50% of the n ratios fall is the ratio of the particle diameter of the first active material particles 3011 to the particle diameter of the second active material particle 3012 in the plurality of particle groups 30. Similarly, a ratio of the particle diameter of the second active material particles 3012 to the particle diameter of the third active material particles 3013 in the plurality of particle groups 30 can be determined.

By setting an appropriate ratio and difference between the particle diameter of the first active material particles 3011 in the plurality of particle groups 30, the particle diameter of the second active material particles 3012 in the plurality of particle groups 30, and the particle diameter of the third active material particles 3013 in the plurality of particle groups 30, the packing efficiency between the active material particles 301 is improved, and the pores between the active material particles 301 are downsized, thereby further improving the volume utilization of the active material layer. Applying the active material layer to the electrochemical device 100 (such as a lithium-ion battery) can increase the energy density of the electrochemical device 100. In addition, this can increase the number of active material particles 301 bonded around a single first binder particle 302, and improve the bonding between the active material particles 301 and the current collector 20.

In some embodiments, a ratio of the length of the bonding between the edge of the cross section of the first active material particles 3011 in the plurality of particle groups 30 and the first binder particle 302 to the perimeter of the cross section of the first active material particles 3011 is 0.05 to 0.2. In some embodiments, one first active material particles 3011 may be bonded by a plurality of first binder particles 302. A ratio of the length of physical contact with the plurality of first binder particles 302 in the cross section of the first active material particles 3011 to the entire perimeter of the first active material particles 3011 is the ratio of the length of the bonding between the edge of the cross section of the first active material particles 3011 and the first binder particle 302 to the perimeter of the cross section of the first active material particles 3011. In this application, the ratio of the length of the bonding between the edge of the cross section of the first active material particles 3011 in the plurality of particle groups 30 and the first binder particle 302 to the perimeter of the cross section of the first active material particles 3011 may be a result obtained by evaluating the first active material particles 3011 of the plurality of particle groups 30 under a scanning electron microscope. For a single first active material particles 3011, the ratio of the length of the bonding between the edge of the cross section of the first active material particles 3011 and the first binder particle 302 to the perimeter of the cross section of the first active material particles 3011 can be determined. The plurality of particle groups include a plurality of first active material particles 3011. Corresponding ratios of the plurality of first active material particles 3011 can be determined. A range in which at least 50% of the ratios fall is the ratio of the length of the bonding between the edge of the cross section of the first active material particles 3011 in the plurality of particle groups 30 and the first binder particle 302 to the perimeter of the cross section of the first active material particles 3011.

In some embodiments, if the ratio is too low, the bonding force between the first binder particle 302 and the first active material particles 3011 may be relatively weak, thereby affecting the bonding between the active material layer 21 and the current collector 20. If the ratio is too high, it indicates that the particle diameter of the first active material particles 3011 is too small, the specific surface area is too large, and the side reactions between the active material particles 301 and the electrolytic solution increase, thereby affecting the cycle performance of the electrochemical device 100.

The active material layer 21 may include at least one type of binder. In some embodiments, the active material layer 21 includes a first binder, for example, the first binder particle 302. In some embodiments, the composition of the first binder particle 302 includes polyolefin. Generally, in order to improve the bonding between the active material layer 21 and the current collector 20, the content of the binder is increased or a highly adhesive binder is adopted. However, the increased content of the binder exerts a limited effect on the improvement of the bonding force. For example, when the mass percent of the binder polyvinylidene difluoride (PVDF) in the active material layer is increased from 1% to 3%, the bonding strength of the wet active material layer infiltrated by the electrolytic solution is increased from 9 N/m to 18 N/m. The improvement is limited. Moreover, this decreases the content of the active material, and thereby decreases the energy density. In addition, the hardness of some highly adhesive binders currently available is relatively high, and the hardness of the active material is also relatively large. If the compacted density is increased in a cold-pressing stage of the electrode plate, the electrode plate is very likely to snap off, thereby limiting the cold-pressing density of the electrode plate and reducing the energy density. The composition of the first binder particle in this application includes polyolefin. The polyolefin can bond well to the current collector 20, thereby improving the bonding between the active material layer 21 and the current collector 20. In addition, the hardness of the polyolefin is relatively low, and is unlikely to cause brittle cracks of the electrode plate in the cold-pressing stage, thereby reducing the adverse effect of the binder of high hardness on the compacted density of the electrode plate. The polyolefin includes at least one of polypropylene or polyethylene.

In some embodiments, the active material layer 21 further includes a second binder. The second binder includes at least one of polyacrylic acid sodium salt, polyacrylic acid, polyacrylate, polymethyl methacrylate, polyacrylonitrile, polyamide, or sodium carboxymethyl cellulose. Such second binders are highly adhesive binders, and can further enhance the bonding strength between the active material layer 21 and the current collector 20. In some embodiments, based on a total mass of the active material layer 21, a percentage of a total mass of the first binder and the second binder is 0.5% to 8%. If the percentage of the total mass of the first binder and the second binder is too low, the exertion of the bonding performance will be affected. If the percentage of the total mass of the first binder and the second binder is too high, the content of the active material in the active material layer 21 will decrease, thereby reducing the energy density of the electrochemical device 100. In some embodiments, a mass ratio of the first binder to the second binder in the active material layer 21 is 1:10 to 10:1.

Understandably, the particle diameters of the first active material particle 3011, the second active material particle 3012, and the third active material particle 3013 in FIG. 3 are merely exemplary, but not intended to limit this application. For example, in some embodiments, an active material particle 301 and/or a first binder particle 302 that do not constitute a particle group 30 may exist in the active material layer 21. In some embodiments, the first binder particle 302 bonds at least three active material particles 301. Understandably, FIG. 3 is merely illustrative, and shows the active material layer 21 located on one side of the current collector 20, so as to facilitate description of the embodiment. The number of active material layers 21 and the shape and size of the particles are not intended to limit this application.

In some embodiments, a microstructure of the active material layer in a thickness direction may be observed and tested by a scanning electron microscopy technique, so as to obtain distribution information of the active material particles and the binder particles, for example, the number of the active material particles bonded by the first binder particle, the particle diameters of and the ratio relationship between the first active material particle, the second active material particle, and the third active material particle, and the ratio of the length of the bonding between the edge of the cross section of the first active material particle and the first binder particle to the perimeter of the cross section of the first active material particle. Understandably, this is merely exemplary, and other commonly used methods may apply.

An embodiment of this application further provides an electronic device containing the electrochemical device 100. The electronic device according to the embodiments of this application is not particularly limited, and may be any electronic device known in the prior art. In some embodiments, the electronic device may include, but is not limited to, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game machine, a watch, an electric tool, a flashlight, a camera, a large household battery, a lithium-ion capacitor, and the like.

Some specific embodiments and comparative embodiments are enumerated below to give a clearer description of this application, using a lithium-ion battery as an example. For ease of description, polyolefin is adopted in the active material layer of a positive electrode plate 10. A person skilled in the art can easily learn or is able to learn that when such a structure is adopted in the active material layer of a negative electrode plate 12, the same effect can be achieved as if the polyolefin is adopted in the active material layer of the positive electrode plate 10.

### Embodiment 1

Preparing a positive electrode plate 10: Using lithium cobalt oxide as a positive active material, using conductive carbon black particles as a conductive agent, using polypropylene as a first binder, using sodium polyacrylate as a second binder, and using an aluminum foil as a positive current collector. Mixing the lithium cobalt oxide, the conductive carbon black, the polypropylene, and the sodium polyacrylate at a mass ratio of 97: 1: 1: 1, and dissolving the mixture in an N-methyl-pyrrolidone (NMP) solution to form a positive slurry. Coating the aluminum foil with the positive slurry to obtain an active material layer, and performing drying, cold pressing, and cutting to obtain a positive electrode plate 10.

Preparing a negative electrode plate 12: Using graphite as a positive active material, using sodium carboxymethyl cellulose (CMC) as a conductive agent, using styrene butadiene rubber as a binder, and using a copper foil as a negative current collector. Dissolving the graphite, the sodium carboxymethyl cellulose (CMC), and the binder styrene butadiene rubber at a mass ratio of 97.7: 1.3: 1 in deionized water to form an active material layer slurry. Using a 10 µm-thick copper foil as a negative current collector, coating the negative current collector with the negative slurry in an amount of 9.3 mg/cm², and performing drying and cutting to obtain a negative electrode plate 12.

Preparing a separator 11: Using 8 µm-thick polyethylene (PE) as a substrate of the separator 11, coating both sides of the substrate of the separator 11 with a 2 µm-thick aluminum oxide ceramic layer. Finally, coating 2.5 mg of polyvinylidene difluoride (PVDF) as a binder onto both sides that carry the ceramic layer, and performing drying.

Preparing an electrolytic solution: Adding LiPF₆ into a nonaqueous organic solvent in an environment in which a water content is less than 10 ppm, where the mass ratio of ethylene carbonate (EC): diethyl carbonate (DEC): propylene carbonate (PC): acrylate: vinylene carbonate (VC) is 20: 30: 20: 28: 2 and the concentration of the LiPF₆ is 1.15 mol/L; and mixing the solution evenly to obtain an electrolytic solution.

Preparing a lithium-ion battery: Stacking the positive electrode plate 10, the separator 11, and the negative electrode plate 12 sequentially so that the separator 11 is located between the positive electrode plate 10 and the negative electrode plate 12 to serve a function of separation, and winding the stacked plates to obtain an electrode assembly 1. Putting the electrode assembly 1 in an aluminum plastic film that serves as an outer package, dehydrating the electrode assembly under 80 °C, injecting the electrolytic solution, and performing sealing; and performing steps such as chemical formation, degassing, and edge trimming to obtain a lithium-ion battery.

The steps in the embodiments and comparative embodiments are the same as those in Embodiment 1 except changed parameter values. The specific changed parameter values are shown in the following table.

The mass percent of polypropylene particles and the mass percent of sodium polyacrylate particles in the active material layer in Embodiments 2 to 4 are different from those in Embodiment 1.

In Comparative Embodiment 1, the binder is not the polypropylene or the sodium polyacrylate, but is polyvinylidene difluoride that accounts for a mass percent of 2%. In Comparative Embodiment 2, the binder is not the polypropylene, but is sodium poly acrylate that accounts for a mass percent of 2%.

In Embodiments 5 to 7 and Comparative Embodiments 3 and 4, the particle diameter range of the polypropylene particles is different from that in Embodiment 1.

In Embodiments 8 to 10 and Comparative Embodiments 5 and 6, the particle diameter range of the lithium cobalt oxide particles as the active material is different from that in Embodiment 1. The following describes the testing method of each parameter in this application.

### Method for testing the particle diameter of particles:

Sampling: Disassembling an electrochemical device 100 (such as a lithium-ion battery), taking out an electrode plate, and soaking the electrode plate in a dimethyl carbonate (DMC) solution for 6 hours to remove the residual electrolytic solution. Finally, drying the electrode plate in an oven. Preparing a specimen: Cutting out a to-be-tested section of the electrode plate with a knife, that is, a section of the active material layer sectioned along the thickness direction; pasting the specimen onto paraffin by using a heating plate, and polishing the to-be-tested section with an ion polisher IB-195020 CCP, so that an SEM specimen is obtained after the surface of the section is smooth. Testing: Observing the microstructure of the active material layer in the thickness direction by using a scanning electron microscope JEOL6390.

### Method for testing the bonding strength between the active material layer and the current collector:

Taking out a positive electrode plate 10 from a lithium-ion battery, spreading out the positive electrode plate 10, drying the positive electrode plate by leaving it in the natural air for 1 hour, and then cutting out a specimen of 30 mm in width and 150 mm in length by using a knife. Fixing the specimen onto a test fixture of a Go Tech tensile testing machine to test the bonding strength, where the peel angle is 90 degrees, the stretching speed is 50 mm/min, and the tensile displacement is 60 mm. When the peeling interface is an interface between the current collector and the active material layer, the measured result is the bonding strength between the active material layer and the current collector.

### Method for testing the compacted density (PD):

Punching a cold-pressed positive electrode plate 10 with a 1540.25 mm² die to obtain 6 pieces of positive active material layer and 6 pieces of positive current collector. Using an analytical balance (an FA2004B electronic balance manufactured by Shanghai Jingke Tianmei) to measure the total weight of the 6 pieces of positive active material layer, recorded as Mc g, and measure the total weight of the 6 pieces of current collector, recorded as Mb g. Using a micrometer to measure the average thickness of the 6 pieces of positive active material layer, recorded as Dc mm, and measure the average thickness of the 6 pieces of current collector, recorded as Db mm. PD = [(Mc - Mb)/6]/(Dc - Db)/1540.25 ∗ 1000 (unit: g/ml).

### Method for testing the energy density:

Putting the lithium-ion battery into a 25° C thermostat, and leaving the battery to stand for 30 minutes so that the temperature of the lithium-ion battery is constant. Charging the lithium-ion battery at a constant current of 0.5 C under a constant temperature until the voltage reaches 4.45 V, and then charging the battery at a constant voltage of 4.45 V until the current reaches 0.05 C; then discharging the battery at a current of 0.5 C until the voltage reaches 3.0 V, and recording the discharge energy.

Table 1 shows parameters and evaluation results in Embodiments 1 to 5 and Comparative Embodiments 1 to 2.

**Table 1**

| Embod iment | Mass percent of polyprop ylene particles in active material layer | Mass percent of sodium polyacryl ate particles in active material layer | Diameter range of polyprop ylene particles (µm) | Diameter range of lithium cobalt oxide particles as active material (µm) | Number of lithium cobalt oxide particles as active material bonded around a single polypropylene particle | Ratio of diameter of first active material particles to diameter of second active material particles | Ratio of diameter of second active material particles to diameter of third active material particles | Ratio of length of bonding between edge of cross section of first active material particles and polypropylene particle to perimeter of cross section of first active material particles | Bonding strength between active material layer and current collector (N/m) | Compacted density of positive electrode plate 10 (g/ml) | Energy density of electroch emical device (Wh/L) |
|---|---|---|---|---|---|---|---|---|---|---|---|
| 1 | 1% | 1% | 0.5 to 1 | 2 to 20 | 3 to 5 | 2:1 to 7:1 | 1:1 to 4:1 | 0.05 to 0.2 | 163 | 4.00 | 707 |
| 2 | 1% | 0.5% | 0.5 to 1 | 2 to 20 | 3 to 5 | 2:1 to 7:1 | 1:1 to 4:1 | 0.05 to 0.2 | 117 | 4.02 | 708 |
| 3 | 2% | 0.5% | 0.5 to 1 | 2 to 20 | 3 to 5 | 2:1 to 7:1 | 1:1 to 4:1 | 0.05 to 0.2 | 152 | 4.10 | 712 |
| 4 | 0.5% | 1% | 0.5 to 1 | 2 to 20 | 3 to 5 | 2:1 to 7:1 | 1:1 to 4:1 | 0.05 to 0.2 | 141 | 3.70 | 687 |

| Comparative Embodiment | | | | | | | | | | | |
|---|---|---|---|---|---|---|---|---|---|---|---|
| 1 | 2% polyvinylidene difluoride (PVDF) | | \ | \ | \ | \ | \ | \ | 35 | 4.10 | 714 |
| 2 | \ | 2% | \ | \ | \ | \ | \ | \ | 203 | 2.88 | 619 |

As can be seen from comparison between Embodiments 1 to 4 and Comparative Embodiments 1 to 2, when the binder of the active material layer is polyvinylidene difluoride (PVDF), the bonding strength between the active material layer and the current collector is very low. By using highly adhesive polyacrylic acid as the binder instead, the bonding strength between the active material layer and the current collector is increased significantly, but the compacted density is reduced significantly, thereby reducing the energy density of the electrochemical device 100 significantly. After the polyolefin polypropylene (PP) is adopted in the active material layer, the bonding strength between the active material layer and the current collector is increased, without impairing the energy density of the electrochemical device 100 significantly. In addition, the higher the percentage of the polypropylene in the binder, the more significantly the compacted density of the positive electrode plate 10 and the energy density of the electrochemical device 100 are improved. FIG. 4 and FIG. 5 show a scanning electron microscopy image of an active material layer of a positive electrode plate 10 according to Embodiment 1 and Embodiment 4 respectively. In addition, as the total content of the binder increases, the compacted density of the positive electrode plate 10 can be increased without brittle cracking, thereby increasing the energy density of the electrochemical device 100.

Table 2 shows parameters and evaluation results in Embodiments 1 and 5 to 7 and Comparative Embodiments 3 to 4.

**Table 2**

| Embodi ment | Mass percent of polypro pylene particle s in active materia l layer | Mass percent of sodium polyacrylat e particles in active material layer | Diameter range of polypropyl ene particles (µm) | Diameter range of lithium cobalt oxide particles as active material (µm) | Number of lithium cobalt oxide particles as active material bonded around a single polypropylene particle | Ratio of diameter of first active material particles to diameter of second active material particles | Ratio of diameter of second active material particles to diameter of third active material particles | Ratio of length of bonding between edge of cross section of first active material particles and polypropylene particle to perimeter of cross section of first active material particles | Bonding strength between active material layer and current collector (N/m) | Compacted density of positive electrode plate 10 (g/ml) | Energy density of electroche mical device (Wh/L) |
|---|---|---|---|---|---|---|---|---|---|---|---|
| 1 | 1% | 1% | 0.5 to 1 | 2 to 20 | 3 to 5 | 2:1 to 7:1 | 1:1 to 4:1 | 0.05 to 0.2 | 163 | 4.00 | 707 |
| 5 | 1% | 1% | 0.1 to 0.6 | 2 to 20 | 3 to 4 | 2:1 to 7:1 | 1:1 to 4:1 | 0.05 to 0.2 | 129 | 4.00 | 707 |
| 6 | 1% | 1% | 0.8 to 1.5 | 2 to 20 | 3 to 5 | 2:1 to 7:1 | 1:1 to 4:1 | 0.05 to 0.2 | 154 | 4.00 | 707 |
| 7 | 1% | 1% | 1.2 to 2 | 2 to 20 | 3 to 5 | 2:1 to 7:1 | 1:1 to 4:1 | 0.05 to 0.2 | 158 | 4.00 | 707 |

| Comparative Embodiment | | | | | | | | | | | |
|---|---|---|---|---|---|---|---|---|---|---|---|
| 3 | 1% | 1% | 0.05 to 0.1 | 2 to 20 | 1 to 2 | 2:1 to 8:1 | \ | 0.05 to 0.2 | 98 | 4.00 | 707 |
| 4 | 1% | 1% | 2 to 4 | 2 to 20 | 2 to 5 | 2:1 to 8:1 | 1:1 to 4:1 | 0.05 to 0.2 | 117 | 4.00 | 707 |

As can be seen from comparison between Embodiments 1 and 5 to 7 and Comparative Embodiments 3 to 4, as the particle diameter of the polypropylene particles decreases, the number of active material particles bonded around a single polypropylene particle decreases, and the efficiency of mutual bonding between the lithium cobalt oxide particles serving as the active material decreases accordingly. When the particle diameter of the polypropylene particle is less than 0.1 µm, the number of lithium cobalt oxide particles serving as the active material bonded around a single polypropylene particle is less than 3, and the bonding strength between the active material layer and the current collector decreases significantly. When the particle diameter of the polypropylene particle is greater than 3.5 µm, the polypropylene particle is too large to efficiently fill the pores between the lithium cobalt oxide particles serving as the active material. Consequently, pores are generated between the polypropylene particle and the lithium cobalt oxide particle serving as the active material, thereby reducing the effective bonding area of the polypropylene particle, reducing the bonding strength between the active material layer and the current collector, increasing the thickness of the electrode plate, and reducing the energy density of the electrochemical device 100. Further, a preferred particle diameter of the polypropylene particles is 0.5 µm to 1 µm. In this case, at least three active material particles are bonded around a single polypropylene particle.

Table 3 shows parameters and evaluation results in Embodiments 1 and 8 to 10 and Comparative Embodiments 5 to 6.

**Table 3**

| Embod iment | Mass percent of polypro pylene particle s in active materia l layer | Mass percent of sodium polyacryla te particles in active material layer | Diameter range of polyprop ylene particles (µm) | Diameter range of lithium cobalt oxide particles as active material (µm) | Number of lithium cobalt oxide particles as active material bonded around a single polypropylene particle | Ratio of diameter of first active material particles to diameter of second active material particles | Ratio of diameter of second active material particles to diameter of third active material particles | Ratio of length of bonding between edge of cross section of first active material particles and polypropylene particle to perimeter of cross section of first active material particles | Bonding strength between active material layer and current collector (N/m) | Compacted density of positive electrode plate 10 (g/ml) | Energy density of electroc hemical device (Wh/L) |
|---|---|---|---|---|---|---|---|---|---|---|---|
| 1 | 1% | 1% | 0.5 to 1 | 2 to 20 | 3 to 5 | 2:1 to 7:1 | 1:1 to 4:1 | 0.05 to 0.2 | 163 | 4.00 | 707 |
| 8 | 1% | 1% | 0.5 to 1 | 2 to 8 | 3 to 5 | 2:1 to 4:1 | 1:1 to 3:1 | 0.10 to 0.2 | 155 | 3.93 | 703 |
| 9 | 1% | 1% | 0.5 to 1 | 4 to 16 | 3 to 4 | 2:1 to 4:1 | 1:1 to 3:1 | 0.053 to 0.125 | 142 | 3.80 | 691 |
| 10 | 1% | 1% | 0.5 to 1 | 3 to 19 | 3 to 5 | 2:1 to 6:1 | 1:1 to 4:1 | 0.056 to 0.167 | 160 | 3.96 | 705 |

| Comparative Embodiment | | | | | | | | | | | |
|---|---|---|---|---|---|---|---|---|---|---|---|
| 5 | 1% | 1% | 0.5 to 1 | 10 to 20 | 1 to 2 | 1:1 to 2:1 | \ | 0.05 to 0.1 | 103 | 3.70 | 688 |
| 6 | 1% | 1% | 0.5 to 1 | 20 to 30 | 1 to 2 | 1:1 to 1.5:1 | \ | 0.025 to 0.05 | 87 | 3.52 | 675 |

As can be seen from comparison between Embodiments 1 and 8 to 10 and Comparative Embodiments 5 to 6, as the particle diameter of the lithium cobalt oxide particles serving as the active material increases, or as the particle diameter range of the lithium cobalt oxide particles serving as the active material narrows, the packing efficiency between the lithium cobalt oxide particles serving as the active material declines, the pores between the lithium cobalt oxide particles serving as the active material are enlarged, the number of the lithium cobalt oxide particles serving as the active material bonded around a single polypropylene particle decreases, and the ratio of the length of bonding between the edge of the cross section of the largest first active material particles and the polypropylene particle to the perimeter of the cross section of the first active material particles decreases, thereby reducing the bonding strength between the lithium cobalt oxide particles serving as the active material. In addition, the enlargement of the packing pores reduces the volume utilization of the active material layer, and thereby reduces the energy density of the electrochemical device 100.

The foregoing descriptions are merely about exemplary embodiments of this application and the technical principles applied. A person skilled in the art understands that the scope of disclosure in this application is not limited to the technical solutions formed by a specific combination of the foregoing technical features, but also covers other technical solutions formed by arbitrarily combining the foregoing technical features or equivalents thereof, for example, a technical solution formed by replacing any of the foregoing features with a technical feature disclosed herein and serving similar functions.

## Claims

1. An electrode plate, comprising:
a current collector; and
an active material layer located on the current collector, wherein
the active material layer comprises a plurality of particle groups, and a single particle group comprises a first binder particle and at least three active material particles bonded by the first binder particle, wherein
a particle diameter of the first binder particle in the plurality of particle groups is 0.1 µm to 3.5 µm.

2. The electrode plate according to claim 1, wherein the particle diameter of the first binder particle in the plurality of particle groups is 0.3 µm to 1.5 µm.

3. The electrode plate according to claim 1, wherein composition of the first binder particle comprises polyolefin.

4. The electrode plate according to claim 3, wherein the polyolefin comprises at least one of polypropylene or polyethylene.

5. The electrode plate according to any one of claims 1 to 4, wherein a particle diameter of the active material particles in the plurality of particle groups is 1 µm to 40 µm.

6. The electrode plate according to claim 1, wherein
the at least three active material particles comprise a first active material particle, a second active material particle, and a third active material particle; and
a particle diameter of the first active material particles in the plurality of particle groups is larger than a particle diameter of the second active material particles in the plurality of particle groups by 4 µm to 17 µm, a ratio of the particle diameter of the first active material particles in the plurality of particle groups to the particle diameter of the second active material particles in the plurality of particle groups is 2:1 to 7:1, the particle diameter of the second active material particle in the plurality of particle groups is larger than a particle diameter of the third active material particles in the plurality of particle groups by 0.01 µm to 8 µm, and a ratio of the particle diameter of the second active material particles in the plurality of particle groups to the particle diameter of the third active material particles in the plurality of particle groups is greater than 1 and less than or equal to 4.

7. The electrode plate according to claim 1, wherein the active material layer further comprises a second binder, and composition of the second binder comprises at least one of polyacrylic acid sodium salt, polyacrylic acid, polyacrylate, polymethyl methacrylate, polyacrylonitrile, polyamide, or sodium carboxymethyl cellulose.

8. The electrode plate according to claim 7, wherein, based on a total mass of the active material layer, a percentage of a total mass of the first binder particle and the second binder is 0.5% to 8%, and a mass ratio of the first binder particle to the second binder is 1:10 to 10:1.

9. An electrochemical device, comprising a positive electrode plate, a negative electrode plate, and a separator disposed between the positive electrode plate and the negative electrode plate, wherein at least one of the positive electrode plate or the negative electrode plate is the electrode plate according to any one of claims 1 to 8.

10. An electronic device, comprising the electrochemical device according to claim 9.
